# EUROPEAN PATENT SPECIFICATION

(11) **EP 1 543 405 B1**
(45) Date of publication and mention of the grant of the patent: **05.12.2007**
(21) Application number: 03798533.0
(22) Date of filing: 26.09.2003
(51) Int. Cl.: G06F 3/033

(54) **Graphic display control device for displaying graphs**
Graphische Anzeigesteuereinrichtung zum Anzeigen von Graphen
Dispositif de commande d'affichage graphique pour affichage de graphes

(30) Priority: 27.09.2002 JP 2002284076; 30.09.2002 JP 2002286117; 30.09.2002 JP 2002287092
(43) Date of publication of application: 22.06.2005
(73) Proprietor: CASIO COMPUTER CO., LTD., Shibuya-ku, Tokyo 151-8543 (JP)
(72) Inventor: SUDOH, Tomohiro, Akishima-shi, Tokyo 196-0031 (JP)
(74) Representative: Grünecker, Kinkeldey, Stockmair & Schwanhäusser Anwaltssozietät
(86) International application number: PCT/JP2003/012368
(87) International publication number: WO 2004/029791

(56) References cited:
- EP-A- 0 660 244
- US-A- 4 710 758
- US-A1- 2002 149 605
- PATENT ABSTRACTS OF JAPAN vol. 1998, no. 03, 27 February 1998 (1998-02-27) & JP 9 297656 A (CASIO COMPUT CO LTD), 18 November 1997 (1997-11-18)
- "HP 48G Series User's Guide, edition 8" [Online] October 1994 (1994-10), HEWLETT PACKARD COMPANY , XP002286511 Retrieved from the Internet: URL:http://www.hpcalc.org> [retrieved on 2004-06-28] pages 22-1 - pages 23-8

## Description

The present invention relates to a graphic display control device for displaying a graph and a graphic, and a recording medium.

Conventionally, a function electronic calculator comprising a graph display function or a graphic display function has been used in the field of education or for technical calculation by engineers. The function electronic calculator incorporates various function calculation programs therein, and designates a function equation to be expressed by a graph so that a graph indicating the function equation can be drawn on a display screen.

There has been known a function electronic calculator which displays various icons for controlling display of a graph or graphic on a screen and moves or changes a graph according to a selected icon as one of such function electronic calculators.

However, in the case of the function electronic calculator described above, since an icon for instructing to move or change a displayed graph is displayed on the screen, for example, when the number of graph display functions is increased, the number of icons is accordingly increased so that the screen must be increased for the display of the icons or the display area of a graph or graphic must be reduced.

In the case where a plurality of windows in association with execution of an application are displayed on the screen, since, when the application is changed, the display of the window is also eliminated, a function equation or the like displayed on the window cannot be processed by another application.

Conventionally, a graph function electronic calculator having a graph (or graphic) display function has been used in the field of education or for technical calculation by engineers. The function electronic calculator incorporates various function calculation programs, and is capable of displaying a graph based on an input function equation.

Generally, the graph function electronic calculator means a device which calculates a coordinate according to a set coordinate range when a function equation is input, and continuously displays a plot on the coordinate axes displayed on a display screen on the basis of the calculated coordinate to draw a graph.

As one of such graph function electronic calculators, there has been known a graph function electronic calculator which draws a graph having a desired shape (for example, quadratic curve) on the screen of the graph function electronic calculator, displays a corresponding function equation (y = ax²) when a minimum point of the graph and an arbitrary coordinate are input, and displays a graph corresponding to the function equation.

However, when a graph is displayed on the graph function electronic calculator described above, it is required that the entire function equation is input or the graph is drawn to input the minimum point of the graph and an arbitrary coordinate. Therefore, for example, when a graph based on a partial term is desired to display in a function equation constituted by a plurality of terms, the partial term is required to input as one function equation again so that it has been taken some times.

US-A-4 710 758 describes a display in conjunction with a touch screen. The display is capable of displaying the axes of a rectangular coordinate system as well as a plurality of messages. The document relates to a method for automatically calibrating the touch screen to be employed as an input device for the display.

JP 9 297656 A relates to an electronic device such as a calculator, having a display that is capable of displaying function graphs. Moreover, the display enables input in the form of handwriting.

It is an object of the present invention to provide a convenient graphic display control device capable of easily changing a display of a graph or graphic, and a recording medium storing a computer program for performing the above graphic display control.

This is achieved by the features of the independent claims.

According to the invention, a touch operation is performed on a predetermined portion of the coordinate axes so that various display change processes can be performed for the display screen.

According to the invention a value of a coefficient can be changed and the graph displayed on the graph display device can be redisplayed along with the change in the coefficient by a simple operation of, when the first operation of designating or selecting a coefficient of an equation displayed on the equation display device and the second operation for the predetermined portion of the coordinate axes displayed on the graph display device after the first operation are performed, registering a coefficient of the function equation displayed on the equation display device in the predetermined portion of the coordinate axes, and then performing the second operation for the predetermined portion of the coordinate axes. Therefore, a user can easily confirm a change in the shape of the graph along with the change in the registered coefficient.
FIG. 1 is a view showing one example of an appearance of a function electronic calculator;
FIG. 2 is a diagram for explaining a display configuration of a display screen;
FIG. 3 is a block diagram showing a configuration of the function electronic calculator;
FIG. 4 is a flow chart for explaining an operation of a trace pointer movement control process according to a first embodiment;
FIGS. 5A, 5B, 5C, and 5D are diagrams showing transition examples of a screen displayed on a display device according to the first embodiment;
FIGS. 6A and 6B are diagrams showing data structures of a ROM and a RAM according to a second embodiment of the invention;
FIG. 7 is a flow chart for explaining an operation of a variable change control process according to the second embodiment ;
FIGS. 8A, 8B, 7C, 8D, 8E, and 8F are diagrams showing transition examples of a screen displayed on a display device according to the second embodiment ;
FIGS. 9A and 9B are diagrams showing data structures of a ROM and a RAM according to a third embodiment of the invention;
FIG. 10 is a flow chart for explaining an operation of a graph transformation control process according to the third embodiment;
FIG. 11 is a flow chart for explaining an operation of the graph transformation control process according to the third embodiment subsequent to FIG. 10 ;
FIGS. 12A, 12B, 12C, 12D, and 12E are diagrams showing transition examples of a screen displayed on a display device according to the sixth embodiment;
FIG. 13 is a view showing one example of an appearance of a function electronic calculator according to a fourth embodiment;
FIG. 14 is a diagram for explaining a display configuration of a display screen of the fourth embodiment;
FIG. 15 is a block diagram showing a configuration of the function electronic calculator of the fourth embodiment;
FIG. 16 is a flow chart for explaining an operation of a function equation display control process according to the fourth embodiment;
FIGS. 17A and 17B are diagrams showing transition examples of a screen displayed on a display device according to the fourth embodiment;
FIGS. 18A and 18B are diagrams showing data structures of a ROM and a RAM according to a fifth embodiment of the invention;
FIG. 19 is a flow chart for explaining an operation of a variable change control process according to the fifth embodiment;
FIGS. 20A, 20B, and 20C are diagrams showing transition examples of a screen displayed on a display device according to the fifth embodiment;
FIGS. 21A, 21B, and 21C are diagrams showing other transition examples of the screen displayed on the display device according to the fifth embodiment;

Hereinafter, embodiments of a graphic display control device according to the present invention will be described in detail with reference to the drawings. In the following, the present invention will be described byway of an example of a case where a function electronic calculator having a graph & graphic display function is applied, but the embodiments to which the present invention is applicable are not limited thereto.

### [First embodiment]

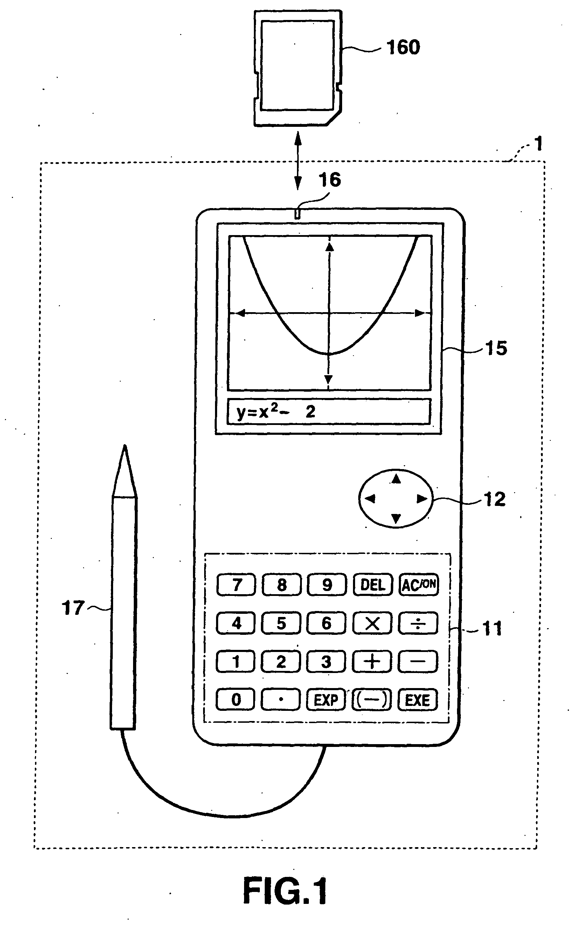

FIG. 1 is a view showing one example of an appearance of a function electronic calculator 1 according to the present embodiment. A case where a typical function electronic calculator is applied is exemplified as the function electronic calculator 1, but a calculation device (computer) comprising a calculating function may be employed and the function electronic calculator is not limited to the above.

The function electronic calculator 1 comprises a calculation unit (not shown) which performs a calculation process, operation input keys 11 which perform inputting of numeric/function/calculation operation, a direction key 12 which performs scrolling of a screen or selection operation, a display screen 15 which displays input numerals or graphs, an input pen 17, and a power supply (not shown) such as an incorporated battery or a solar battery. The function electronic calculator 1 is cased, for example, in a card shape by a metal or a resin.

The operation input keys 11 and the direction key 12 are operation inputting means similar to the conventional function electronic calculator 1, and can be realized by a key switch, a touch panel, or the like, for example.

The display screen 15 is a portion on which various data such as characters, codes, or graph displays in response to the pressing of the operation input keys 11, which are required for using the function electronic calculator 1, are displayed, and on which characters or graphics are displayed by dots. The display screen 15 is an element such as a LCD (Liquid Crystal Display) or an ELD (Electronic Luminescent Display), and can be realized by a single element or a combination of several elements.

The function electronic calculator 1 comprises a slot 16 for a storage medium 160. The storage medium 160 is a storage medium which stores function equation data and the like therein, such as, for example, a memory card, or a hard disk. The slot 16 is a device which detachably mounts the storage medium 160 and can read/write data from/into the storage medium 160, and is appropriately selected according to the type of the storage medium 160.

A tablet (touch panel) is integrally constituted on the display screen 15, where press-inputting by the input pen 17 can be sensed.

Various functions such as a calculating function, a graph function, a program function, and the like are mounted on the function electronic calculator 1, and each function described above can be executed by selecting an operation mode corresponding to the function to be utilized. For example, when the operation input keys 11 or the like are used to perform a selection operation of a graph mode, the operation mode is set to the graph mode so that a graphic such as a graph can be drawn in the coordinate system based on the set display range.

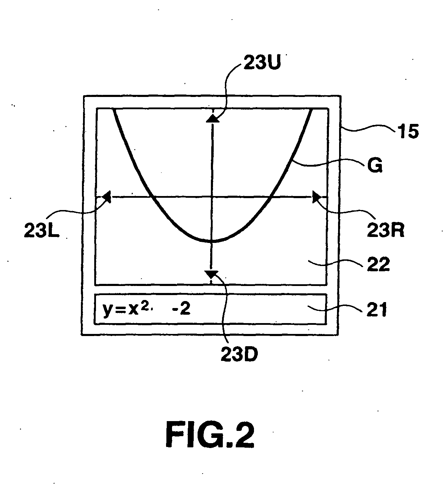

FIG. 2 is a diagram for explaining a display configuration of the display screen 15. A display area of the display screen 15 is divided into a function equation display area 21 and a graph display area 22. An equation or the like input by an operation of the operation input keys 11 or the like is displayed in the function equation display area 21.

A graph G indicating a function equation displayed in the function equation display area 21, a function equation stored in an internal memory of the function electronic calculator 1 or the storage medium 160, or the like is displayed in the graph display area 22 according to an instruction operation key (for example, execution (EXE) key) which instructs to display a graph. Assuming that a lateral direction in the graph display area 22 is an x coordinate and a longitudinal direction is a y coordinate, an x-axis 24 and a y-axis 25 are displayed in the graph display area 22. Graph controllers 23L and 23R and graph controllers 23U and 23D are displayed at both ends of the x-axis 24 and at both ends of the y-axis 25, respectively (hereinafter, the graph controllers 23L, 23R, 23U, and 23D are comprehensively referred to as the graph controller 23).

A description is given assuming that the display area of the display screen 15 is divided into the two areas (screens), i.e., the function equation display area 21 and the graph display area 22, but a function equation and a graph may be displayed on one area.

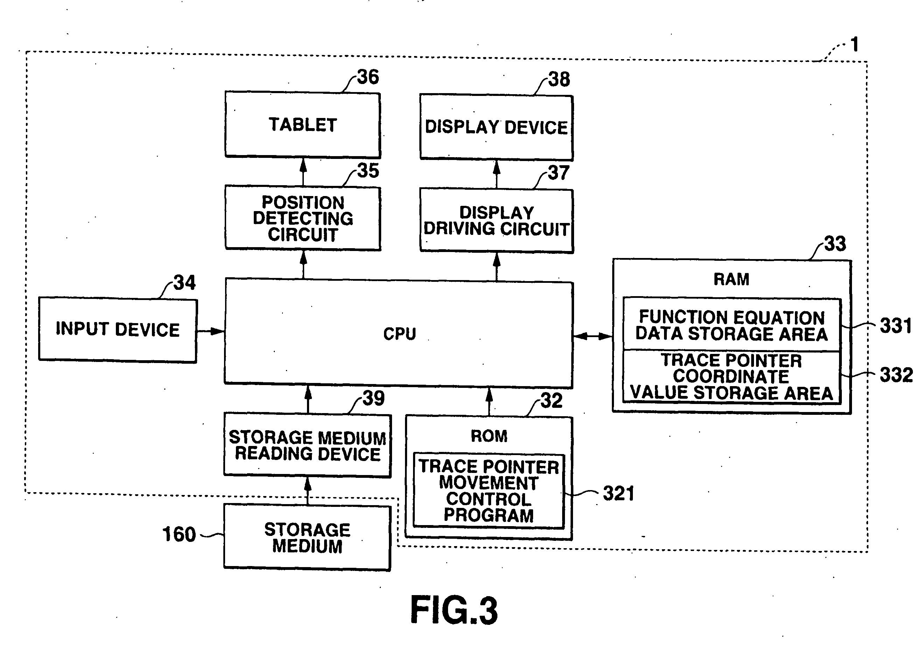

FIG. 3 is a block diagram showing an internal configuration of the function electronic calculator 1. The function electronic calculator 1 comprises a CPU (Central Processing Unit) 31, a ROM (Read Only Memory) 32, a RAM (Random Access Memory) 33, an input device 34, a position detecting circuit 35, a tablet 36, a display driving circuit 37, a display device 38, and a storage medium reading device 39.

The CPU 31 performs a process based on a predetermined program in response to an input instruction, and performs instructing to each section, transferring of data, and the like. Specifically, the CPU 31 reads out a program stored in the ROM 32 in response to an operation signal input from the input device 34 or the table 36, and performs a process according to the program. The CPU 31 stores a process result in the RAM 33 and appropriately outputs a display signal for displaying the process result to the display driving circuit 37 so as to display the display information corresponding to the display signal on the display device 38.

The ROM 32 stores various process programs relating to the operation of the function electronic calculator 1 such as various setting processes and various calculation processes, programs for realizing various functions which the function electronic calculator 1 comprises, and the like therein. Further, the ROM 32 stores a trace pointer movement control program 321 therein.

The trace pointer movement control program 321 is a program for causing the CPU 31 to perform a trace pointer movement control process of displaying a trace pointer on the graph displayed on the display device 38 and tracing the graph by the trace pointer.

The RAM 33 comprises a memory area which temporarily holds various programs executed by the CPU 31, data relating to execution of these programs, and the like, such as a function equation data storage area 331 and a trace pointer coordinate value storage area 332.

For example, function equations required when a graph such as linear function, quadratic function, trigonometric function, circle is created are stored in the function equation data storage area 331. A coordinate value indicated by the trace pointer on the graph displayed on the display device 38 is stored in the trace pointer coordinate value storage area 332.

The input device 34 is means by which a user inputs numerals, execution instruction of the calculation process, and the like, and corresponds to the operation input keys 11 and the direction key 12 in the example in FIG. 1. A signal corresponding to the key pressed by the user is output to the CPU 31. The input device 34 may include a pointing device such as a mouse, or the like.

The function electronic calculator 1 comprises the tablet (touch panel) 36 as an input device. The tablet 36 senses a position on the display device 38 indicated (touched) by an input pen (corresponding to the input pen 17 in FIG. 1), and outputs a signal according to the indicated (touched) position. The position detecting circuit 35 connected to the tablet 36 detects a position coordinate indicated on the display device 38 on the basis of the signal input from the tablet 36. When the tablet 36 is used, the position in the display area of the display device 38 can be directly designated. The input pen 17 is touched on the tablet 36 so that operations such as tap-in, drag, tap-out, and drop can be realized.

Tap-in means an operation of contacting the input pen 17 on the display screen 15, and tap-out means an operation of releasing the input pen 17 from the display screen 15 after contacted. Drag means an operation of sliding the input pen 17 onto the display screen 15 from tap-in to tap-out, and drop means an operation of tap-out after drag is performed.

The display driving circuit 37 controls the display device 38 on the basis of the display signal input from the CPU 31 and causes it to display various screens. The display device 38 is constituted by an LCD, an ELD, or the like. The display device 38 corresponds to the display screen 15 shown in FIG. 1, and is integrally formed with the tablet 36.

The storage medium reading device 39 is a function section for performing reading/writing of data from/into the storage medium 160 such as, for example, a memory card, or a hard disk. It corresponds to the slot 16 in FIG. 1.

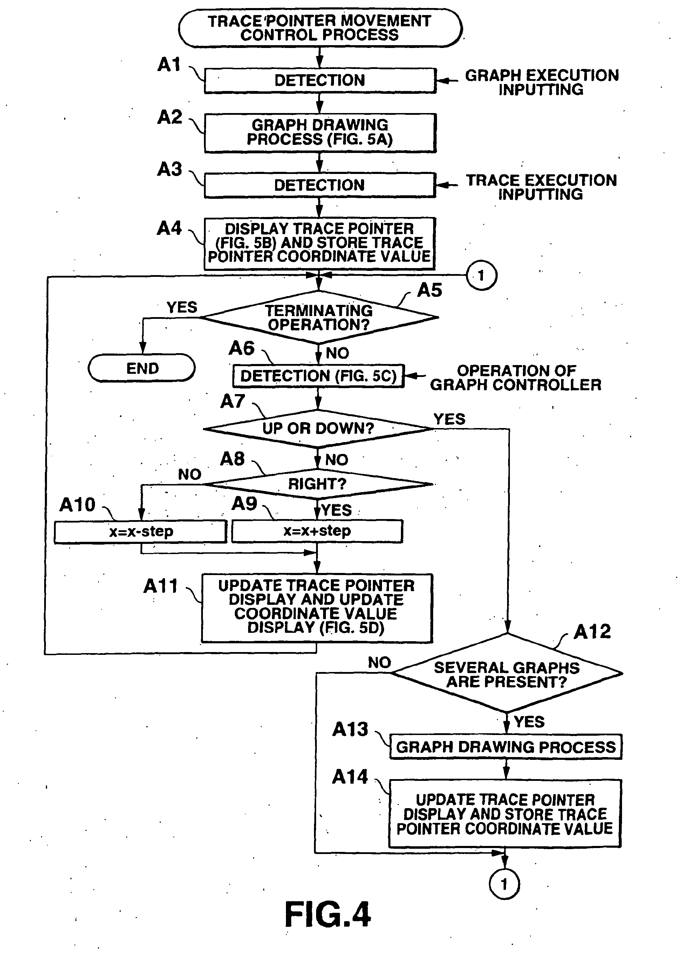

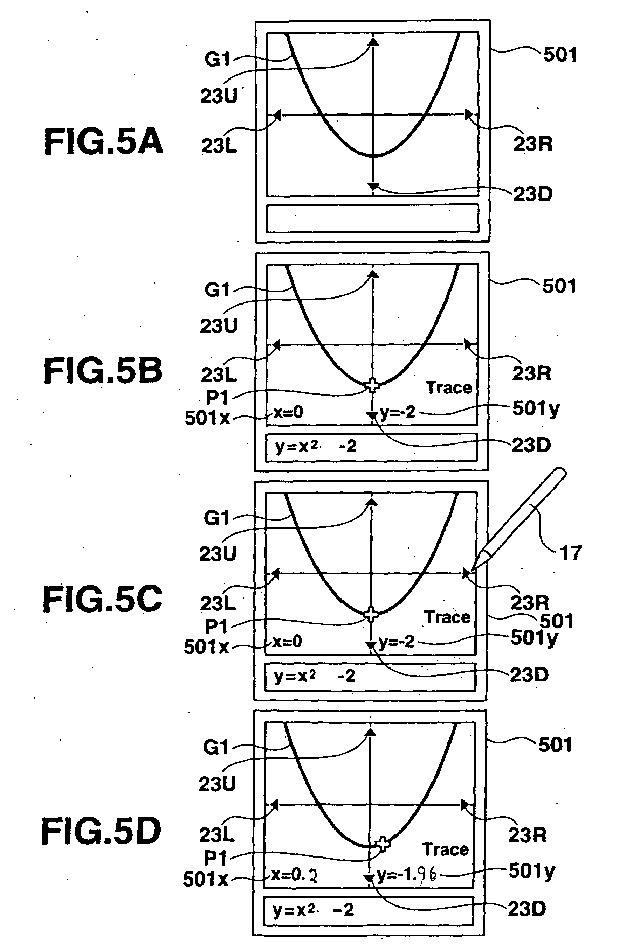

FIG. 4 is a flow chart for explaining an operation of the trace pointer movement control process performed by the function electronic calculator 1. FIGS. 5A, 5B, 5C, and 5D show transition examples of a screen displayed on the display device 38. A flow of the trace pointer movement control process will be described using FIGS. 4 and 5A to 5D.

When the graph mode is instructed by a mode switch operation, the CPU 31 starts execution of a predetermined program relating to the graph mode to set the graph mode, and waits for inputting of the setting items relating to the drawing of the graph such as inputting of an equation or a display range of the graph to be drawn. As shown in FIG. 4, when the CPU 31 detects graph execution inputting (step A1), the CPU 31 performs a graph drawing process according to the function equation stored in the function equation data storage area 331 and the input setting items (step A2; refer to FIG. 5A).

One example of a graph display screen 501 displayed at this stage is shown in FIG. 5A. As illustrated, a graph G1 based on the set display range is drawn on the graph display screen 501.

When the CPU 31 detects trace execution inputting (step A3), the CPU 31 displays a trace pointer P1 at a predetermined position of the graph G1, and displays coordinate values 501x and 501y indicating the position of the trace pointer P1. The coordinate values are stored in the trace pointer coordinate value storage area 332 (step A4; refer to FIG. 5B).

The CPU 31 monitors a terminating operation, and determines whether or not the graph controller 23 has been operated (tapped in/tapped out) by the input pen 17 (step A5). When it is determined that the terminating operation has been detected (step A5: Yes), the present process is terminated.

When the CPU 31 detects an operation of the graph controller 23 by the input pen 17 (step A5 : No, step A6; refer to FIG. 5C), the CPU 31 determines whether or not the up or down graph controller 23U or 23D has been operated (step A7). When the operated graph controller is neither the graph controller 23U nor 23D (step A7: No), the CPU 31 determines whether or not the right graph controller 23R has been operated (step A8). When the right graph controller 23R has been operated (step A8: Yes), the CPU 31 adds a value of a variable "step" to the x coordinate value stored in the trace pointer coordinate value storage area 332 (step A9).

The variable "step" is the amount of increase per one dot in the x-axis of the coordinate displayed on the display device 38, and is previously set such as before the present process is performed. FIG. 5C is a diagram showing the operation of the graph controller 23R by the input pen 17.

When the left graph controller 23L, not the right one, has been operated (step A8: No), the CPU 31 subtracts the value of the variable "step" from the x coordinate value stored in the trace pointer coordinate value storage area 332 (step A10).

The CPU 31 updates the display of the trace pointer P1 and the display of the coordinate values 501x and 501y on the basis of the x coordinate value calculated in step A9 or A10 (step A11; refer to FIG. 5D).

When the CPU 31 determines that the graph controller 23U or 23D has been operated in step A7 (step A7: Yes), the CPU 31 determines whether or not a plurality of function equations are stored in the function equation data storage area 331 (step A12). When a plurality of function equations are not stored (step A12: No), the CPU 31 proceeds the process to step A5. When a plurality of function equations are stored (step A12: Yes), the CPU 31 switches to other function equation, and performs the graph drawing process (step A13).

The CPU 31 displays the trace pointer at a predetermined position on the graph drawn by the process in step A13, and displays the coordinate value indicated by the trace pointer. Further, the coordinate value is stored in the trace pointer coordinate value storage area 332 (step A14), and the process returns to the process in step A5.

As described above, according to the first embodiment, the trace pointer is displayed on the graph displayed on the display device 38 and the input pen 17 is used to operate the graph controller 23 so that tracing of the graph can be performed. Therefore, the user can easily perform the tracing of the graph.

Other embodiments of the graphic display control device according to the present invention will be described. The same portions as those of the first embodiment will be indicated in the same reference numerals and their detailed description will be omitted.

### [Second embodiment]

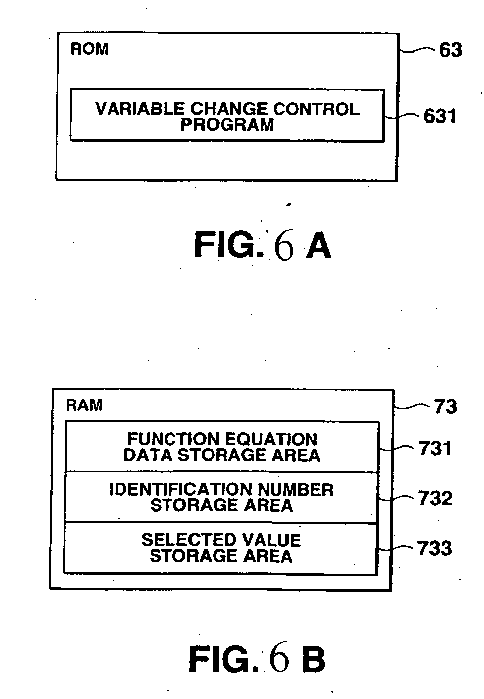

A second embodiment according to the present invention will be described. Since a configuration of a function electronic calculator according to the present embodiment is similar to a configuration where the ROM 32 and the RAM 33 are replaced with a ROM 63 shown in FIG. 6A and a RAM 73 shown in FIG. 6B, respectively, in the configuration of the function electronic calculator 1 described in FIG. 3 according to the first embodiment, like numerals are denoted to like constituents and a description thereof will be omitted below.

As shown in FIG. 6A, the ROM 63 comprises a variable change control program 631. The variable change control program 631 is a program for causing the CPU 31 to perform a variable change control process of changing a selected coefficient in a function equation displayed in the function equation display area 21.

As shown in FIG. 6B, the RAM 73 comprises a function equation data storage area 731, an identification number storage area 732, and a selected value storage area 733. A function equation and an identification number for identifying the function equation are stored in the function equation data storage area 731 in a corresponding manner. In order to identify a graph selected by the CPU 31, an identification number of the function equation corresponding to the graph is stored in the identification number storage area 732. A value of a coefficient selected in the function equation displayed in the function equation display area 21 is stored in the selected value storage area 733.

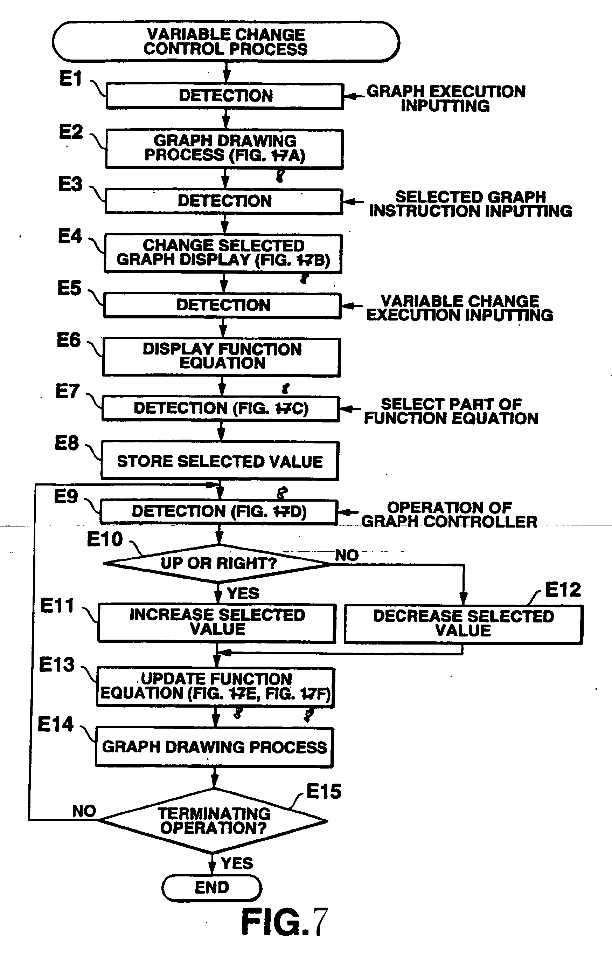

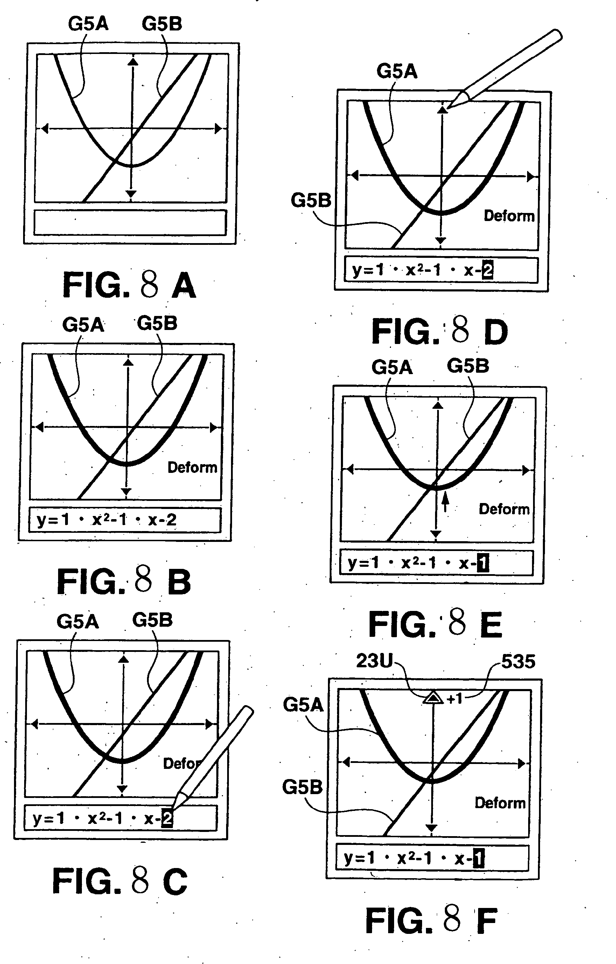

The variable change control process according to the second embodiment of the present invention will be described with reference to FIGS. 7 and 8A to 8F. FIG. 7 shows an operation flow of the function electronic calculator 1, and FIGS. 8A, 8B, 8C, 8D, 8E, and 8F are diagrams showing transition examples of a screen displayed on the display device 38.

When the graph mode is instructed by the mode switch operation, the CPU 31 starts execution of a predetermined program relating to the graph mode to set the graph mode, and waits for inputting of the setting items relating to the drawing of the graph such as inputting of a function equation or a display range of the graph to be drawn. As shown in FIG. 7, when the CPU 31 detects graph execution inputting (step E1), the CPU 31 performs the graph drawing process according to the function equation stored in the function equation data storage area 731 and the input setting items (step E2; refer to FIG. 8A).

One example of a graph display screen 505 displayed at this stage is shown in FIG. 8A. As illustrated, graphs G5A and G5B based on the set display ranges are drawn on the graph display screen 505.

When the CPU 31 detects selected graph instruction inputting (step E3), the CPU-31 selects a specific graph among the displayed graphs (for example, a graph corresponding to a function equation having a smallest identification number), and displays the same by changing a line width, a color, and the like of the graph (step E4; refer to FIG. 8B).

When the CPU 31 detects variable change execution inputting (step E5), the CPU 31 displays a function equation 515 corresponding to the selected graph in the function equation display area 21 (step E6; refer to FIG. 8B). When the CPU 31 detects a selection of a coefficient of the function equation 515 by the input pen 17 (step E7; refer to FIG. 8C), the CPU 31 stores the selected coefficient in the selected value storage area 733 (step E8).

When the CPU 31 detects an operation of the graph controller 23 by the input pen 17 (step E9; refer to FIG. 8D), the CPU 31 determines whether or not the up or right graph controller 23U or 23R has been operated (step E10). When the operated graph controller is the up or right graph controller 23U or 23R (step E10: Yes), the CPU 31 adds a predetermined value to the data stored in the selected value storage area 733 (step E11). When the down or left graph controller 23D or 23L has been operated (step E10: No), the CPU 31 subtracts the predetermined value from the data stored in the selected value storage area 733 (step E12).

The predetermined value means the amount of change of the selected coefficient by one operation of the graph controller 23, and is previously set such as before the variable change control process is performed. FIG. 8D is a diagram showing the operation of the up graph controller 23U by the input pen 17.

The CPU 31 updates a function equation corresponding to the selected graph on the basis of the data stored in the selected value storage area 733, and stores it in the function equation data storage area 731 (step E13; refer to FIGS. 8E and 8F). At this time, an updated function equation 525 is displayed in the function equation display area 23. The CPU 31 performs the graph drawing process on the basis of the updated function equation (step E14). FIG. 8E shows a case where the selected coefficient is incremented by 1 (-2 to -1) .

The CPU 31 monitors the terminating operation, and determines whether or not the graph controller 23 has been operated by the input pen 17 (step E15). When it is determined that the terminating operation has been detected (step E15: Yes), the present process is terminated. When it is determined that the graph controller 23 has been operated by the input pen 17, the process returns to step E9.

As described above, according to the second embodiment, the input pen 17 is used to select a coefficient of the function equation displayed in the function equation display area 21 and to operate the graph controller 23 so that a value of the coefficient can be changed. Therefore, the user can easily confirm the change in the shape of the graph along with the change in the coefficient.

When a coefficient of the function equation corresponding to the graph G5A is changed by the execution of the variable (coefficient) change control process and the graph G5A is redisplayed, the moving direction, the amount of movement, and the like of the graph G5A may be displayed on the graph display screen 505. For example, when the graph G5A moves in the y-axis direction by +1, the display of the graph controller 23U is changed as shown in FIG. 8F so that the amount (+1) of movement 535 is displayed. Thereby, the user can easily grasp the moving direction and the amount of movement of the graph.

### [Third embodiment]

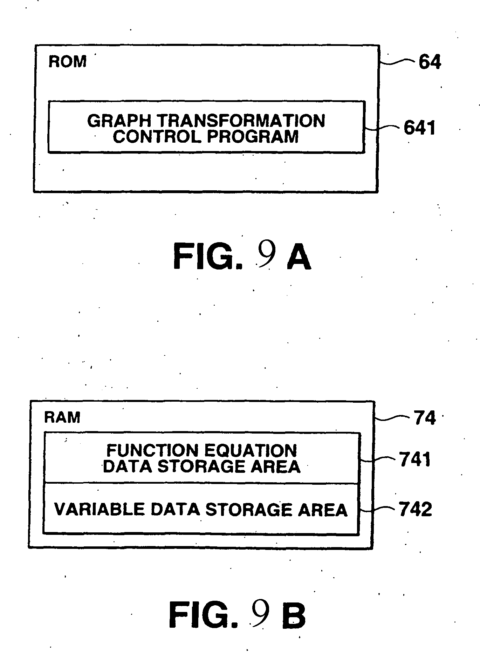

A third embodiment according to the present invention will be described. Since a configuration of a function electronic calculator according to the present embodiment is similar to a configuration where the ROM 32 and the RAM 33 are replaced with a ROM 64 shown in FIG. 9A and a RAM 74 shown in FIG. 9B, respectively, in the configuration of the function electronic calculator 1 described in FIG. 3 according to the first embodiment, like numerals are denoted to like constituents and a description thereof will be omitted below.

As shown in FIG. 9A, the ROM 64 comprises a graph transformation control program 691. The graph transformation control-program 641 is a program for causing the CPU 31 to perform a graph transformation control process of changing a coefficient of a function equation.

As shown in FIG. 9B, the RAM 74 comprises a function equation data storage area 741 and a variable data storage area 742. A function equation corresponding to the graph displayed in the display device 38 is stored in the function equation data storage area 741. A value of a variable of a coefficient in the function equation stored in the function equation data storage area 741, a varying range (upper limit value and lower limit value), the amount of change, and an identification number are stored in the variable data storage area 742. Specifically, for example, when a function equation of "y1 = x² - x - a" is stored in the function equation data storage area 741, the value, the varying range, and the amount of change of the variable "a" are stored. The identification number is directed for identifying to which of the graph controllers 23U, 23D, 23R, and 23L the variable is corresponded.

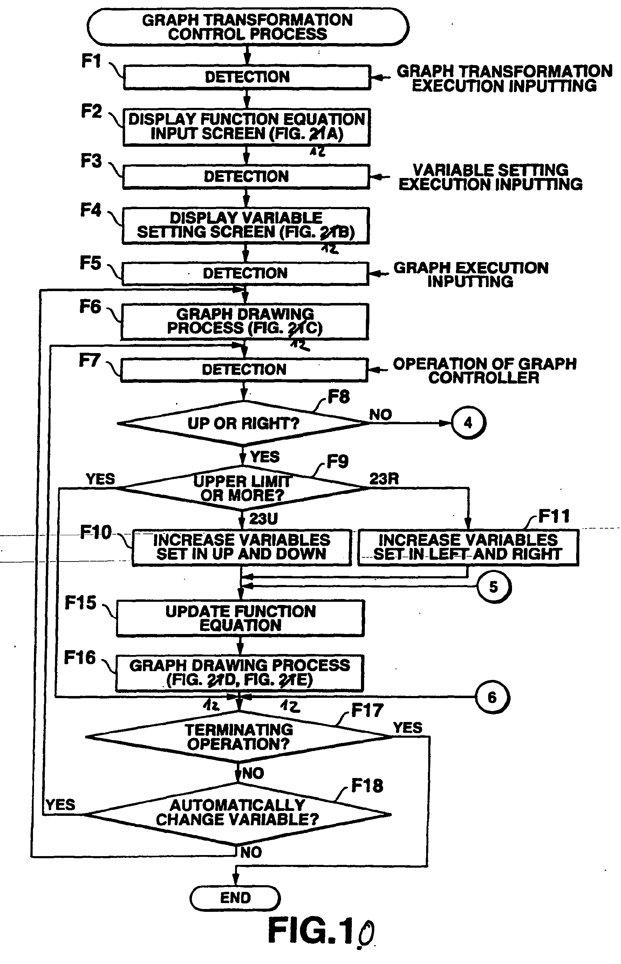

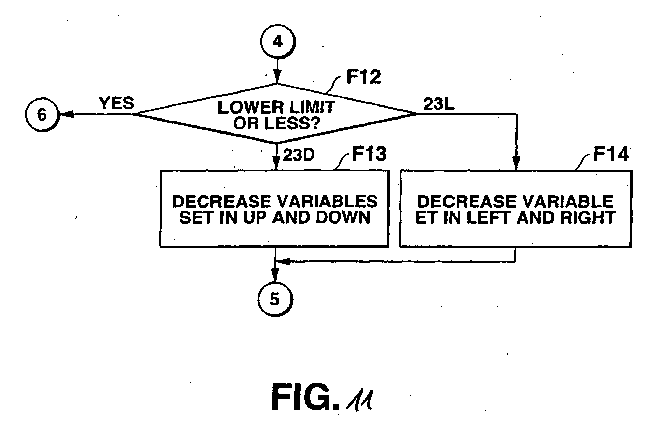

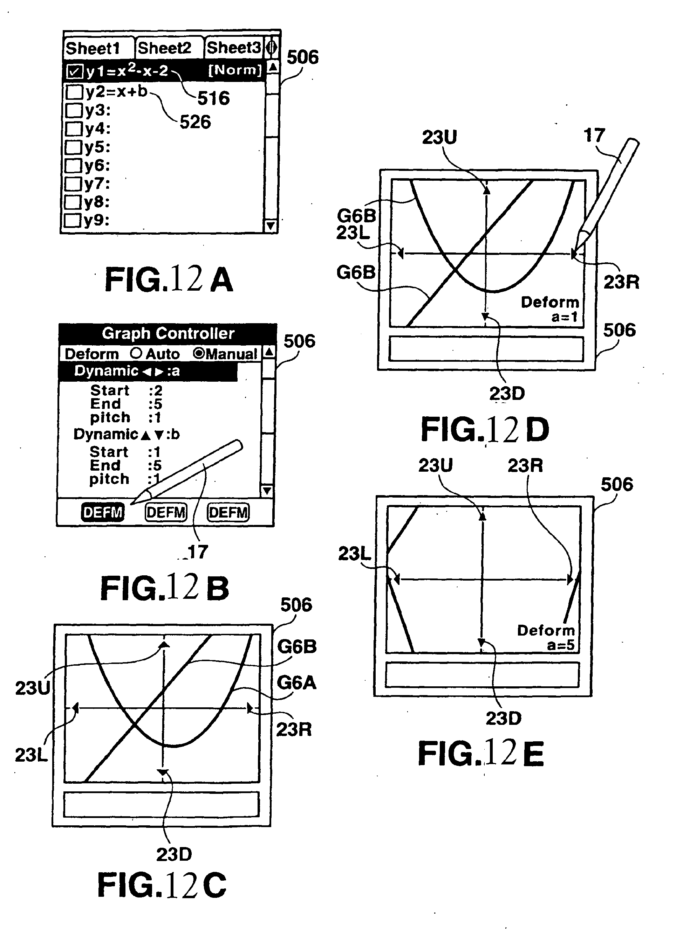

The variable change control process according to the third embodiment of the present invention will be described with reference to FIGS. 10 to 12A to 12E. FIGS. 10 and 11 are diagrams showing an operation flow of the function electronic calculator 1, and FIGS. 12A, 12B, 12C, 12D, and 12E are diagrams showing transition examples of a screen displayed on the display device 38.

When the graph mode is instructed by the mode switch operation, the CPU 31 starts execution of a predetermined program relating to the graph mode to set the graph mode, and waits for inputting of the setting items relating to the drawing of the graph such as inputting of a function equation or a display range of the graph to be drawn. As shown in FIG. 10, when the CPU 31 detects the graph transformation execution process (step F1), the CPU 31 displays an input screen for inputting a function equation (step F2; refer to FIG. 12A). The CPU 31 stores the input function equation in the function equation data storage area 741.

One example of a graph display screen 506 displayed in step F2 is shown in FIG. 12A. As illustrated, function equations 516 and 526 which the user inputs by using the operation input keys 11 or the like are displayed on the graph display screen 506.

When the CPU 31 detects variable setting execution inputting (step F3), the CPU 31 displays a setting screen for setting the varying ranges and the amounts of change of the variables "a" and "b" of the coefficients of the function equation input in step F2 (step F4; refer to FIG. 12B). Further, the input varying ranges and the amounts of change are stored in the variable data storage area 742.

One example of the graph display screen 506 displayed in step F4 is shown in FIG. 12B. For example, when "y1 = x² - x - a" as the function equation 516 and "y2 = x + b" as the function equation 526 are input in step F2 (FIG. 12A), setting columns for setting the varying ranges and the amounts of change for the variables "a" and "b" are displayed. Any one of the graph controllers 23U, 23D, 23L, and 23R is automatically corresponded to each variable by the CPU 31. Alternatively, the user may designate any one graph controller and correspond it thereto. Specifically, for example, as shown in FIG. 12B, the graph controllers 23L and 23R are corresponded to the variable "a," and the graph controllers 23U and 23D are corresponded to the variable "b."

When the CPU 31 detects graph execution inputting (step F5), the PUC 31 performs the graph drawing process according to the function equation stored in the function equation data storage area 741 and the setting value of the variable stored in the variable data storage area 742 (step F6; refer to FIG. 12C). At this time, for example, the lower limit value is substituted to the variable in the function equation so that the graph drawing process is performed.

One example of the graph display screen 506 displayed in step F6 is shown in FIG. 12C. As illustrated, graphs G6A and G6B based on the set display ranges are drawn on the graph display screen 506.

When the CPU 31 detects an operation of the graph controller 23 by the input pen 17 (step F7), the CPU 31 determines whether or not the graph controller 23U or 23R has been operated (step F8). When the operated graph controller is the graph controller 23U or 23R (step F8: Yes), the CPU 31 determines which of the graph controllers 23U and 23R has been operated, and further determines whether or not a value of the variable corresponded to the operated graph controller 23 is the upper limit value or more (step F9). In the case of the upper limit value or more (step F9: Yes), the CPU 31 proceeds the process to step F17.

When the graph controller 23U has been operated and the value of the corresponding variable is less than the upper limit value (step F9: 23U), the CPU 31 adds the amount of change to the value of the variable (here, variable "b") corresponded to the graph controllers 23U and 23D stored in the variable data storage area 742 (step F10). When the graph controller 23R has been operated and the value of the corresponding variable is less than the upper limit value (step F9: 23R), the CPU 31 adds the amount of change to the value of the variable (here, variable "a") corresponding to the controllers 23R and 23L stored in the variable data storage area 742 (step F11). FIG. 12D is a diagram showing the operation of the graph controller 23R by the input pen 17.

When it is determined that the graph controller 23D or 23L has been operated in step F8 (step F8: No), the CPU 31 determines which of the graph controllers 23D and 23L has been operated, and further determines whether or not the value of the variable corresponded to the operated graph controller 23 is the lower limit value or less (step F12). In the case of the lower limit value or less (step F12: Yes), the CPU 31 proceeds the process to step F17.

When the graph controller 23D has been operated and the value of the corresponding variable is more than the lower limit value (step F12: 23D), the CPU 31 subtracts the amount of change from the value of the variable (here variable "b") corresponding to the graph controllers 23U and 23D stored in the variable data storage area 742 (step F13). When the graph controller 23L has been operated and the value of the corresponding variable is more than the lower limit value (step F12: 23L), the CPU 31 subtracts the amount of change from the value of the variable (here, variable "a") corresponding to the graph controllers 23R and 23L stored in the variable data storage area 742 (step F14).

The CPU 31 updates and stores the function equation stored in the function equation data storage area 741 on the basis of the variables of the updated variable data storage area 742 (step F15). Further, the CPU 31 performs the graph drawing process on the basis of the updated function equation (step F16; refer to FIGS. 12D and 12E).

The CPU 31 monitors the terminating operation, and determines whether or not the graph controller 23 has been operated by the input pen 17 (step F17). When it is determined that the terminating operation has been detected (step F17: Yes), the present process is terminated. When it is determined that the graph controller 23 has been operated by the input pen 17, the presence of variable automatic change execution inputting is detected in step F18.

When the variable automatic change execution inputting is detected (step F18: Yes), the CPU 31 proceeds the process to step F18, where the process according to the previously operated graph controller 23 is repeated. When the variable automatic change execution inputting is not detected (step F18: No), the CPU 31 proceeds the process to step F7.

When the variable automatic change execution inputting is detected (step F18: Yes), the present process is terminated.

As described above, according to the third embodiment, the varying range and the amount of change of the variable in the function equation including the variable such as a coefficient are set and the graph controller 23 is operated so that the value of the variable can be changed. Therefore, the user can easily confirm the change in the shape of the graph along with the change in the variable.

### [Fourth embodiment]

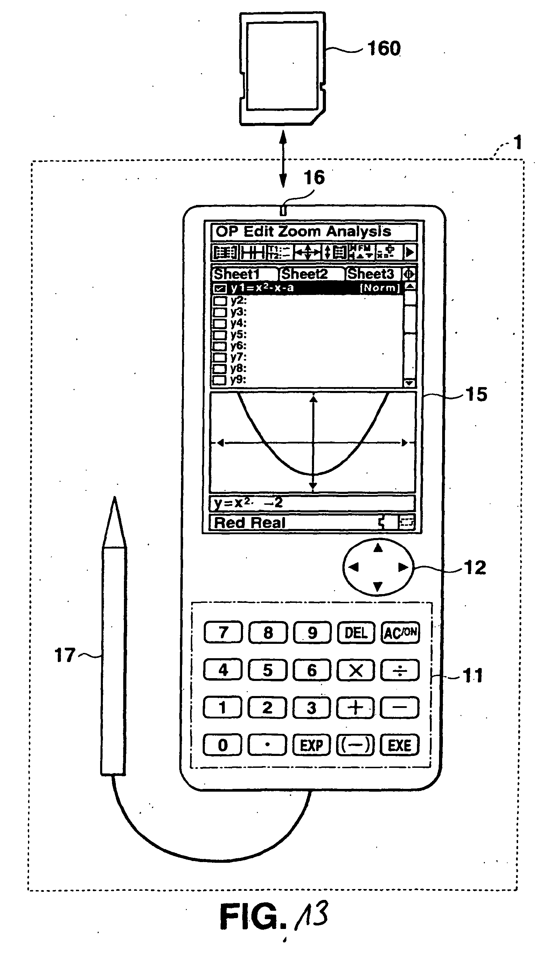

Hereinafter, a fourth exemplary embodiment of a graphic display control device will be described in detail with reference to FIGS. 13 to 17B. In the following, the present invention will be described by way of an example of a case where a function electronic calculator having a graph & graphic display function is applied, but like numerals are denoted to the same constituents as those according to the first to third embodiments.

In the drawing, the function electronic calculator 1 comprises a calculation unit (not shown) which performs a calculation process, the operation input keys 11 which perform inputting of numeric/function/ calculation operation, the direction key 12 which performs scrolling of a screen or selection operation, the display screen 15 which displays input numerals or graphs, the input pen 17, and the power supply (not shown) such as an incorporated battery or a solar battery. The function electronic calculator 1 is cased, for example, in a card shape by a metal or a resin.

The operation input keys 11 and the direction key 12 are operation inputting means similar to the conventional function electronic calculator 1, and can be realized by a key switch, a touch panel, or the like, for example.

The display screen 15 is a portion on which various data such as characters, codes, or graph displays in response to the pressing of the operation input keys 11, which are required for using the function electronic calculator 1, are displayed, and on which characters or graphics are displayed by dots. The display screen 15 is an element such as a LCD (Liquid Crystal Display) or an ELD (Electronic Luminescent Display), and can be realized by a single element or a combination of several elements.

The function electronic calculator 1 comprises the slot 16 for the storage medium 160. The storage medium 160 is a storage medium which stores function equation data and the like therein, such as, for example, a memory card, a hard disk. The slot 16 is a device which detachably mounts the storage medium 160 and can read/write data from/into the storage medium 160, and is appropriately selected according to the type of the storage medium 160.

The tablet (touch panel) is integrally constituted on the display screen 15, where press-inputting by the input pen 17 can be sensed.

Various functions such as a calculating function, a graph function, a program function, and the like are mounted on the function electronic calculator 1, and each function described above can be performed by selecting an operation mode corresponding to the function to be utilized. For example, when the operation input keys 11 or the like are used to perform a selection operation of a graph mode, the operation mode is set to the graph mode so that a graphic such as a graph can be drawn in the coordinate system based on the set display range.

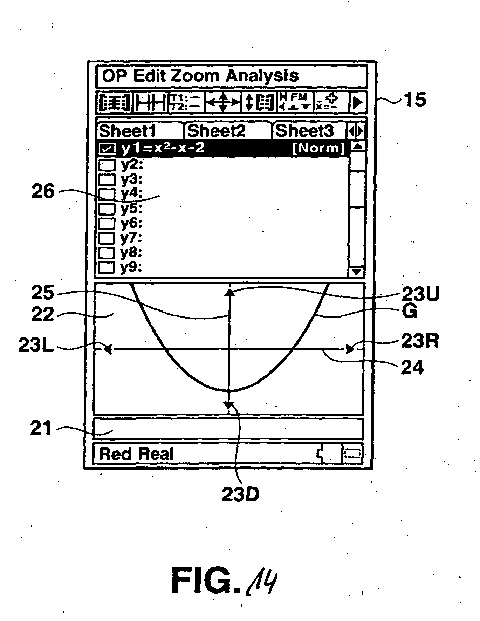

FIG. 14 is a diagram for explaining a display configuration of the display screen 15. A display area of the display screen 15 is divided into the equation display area 21, the graph display area 22, and a function equation input area 23. A function equation corresponding to a graph displayed on the graph display area 22, an equation generated by a calculation process for the graph, or the like is displayed in the equation display area 21. A function equation or the like input by an operation of the operation input keys 11 or the like is displayed in the function equation input area 26.

A graph G indicating a function equation displayed in the equation display area 21 or a function equation stored in an internal memory of the function electronic calculator 1 or the storage medium 160 is displayed in the graph display area 22. Assuming that a horizontal direction in the graph display area 22 is an x coordinate and a longitudinal direction is a y coordinate, the x-axis 24 and the y-axis 25 are displayed in the graph display area 22. Further, the graph controllers 23L and 23R, and the graph controllers 23U and 23D are displayed at both ends of the x-axis 24 and at both ends of the y-axis 25, respectively (hereinafter, the graph controllers 23L, 23R, 23U, and 23D are comprehensively referred to as the graph controller 23).

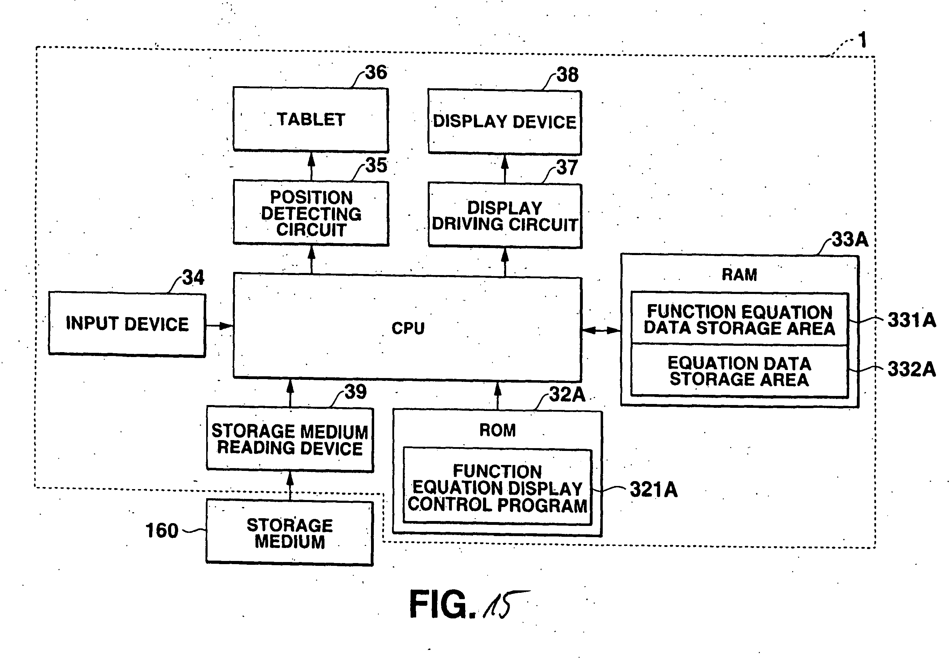

Hereinafter, this fourth embodiment will be described more specifically. FIG. 15 is a block diagram showing a configuration of the function electronic calculator 1. As illustrated, the function electronic calculator 1 is constituted by comprising the CPU (Central Processing Unit) 31, a ROM (Read Only Memory) 32A, a RAM (Random Access Memory) 33A, the input device 34, the position detecting circuit 35, the tablet 36, the display driving circuit 37, the display device 38, and the storage medium reading device 39.

The CPU 31 performs a process based on a predetermined program in response to an input instruction, and performs instructing to each function section, transferring of data, and the like. Specifically, the CPU 31 reads out a program stored in the ROM 32A in response to an operation signal input from the input device 34 or the table 36, and performs a process according to the program. The CPU 31 stores a process result in the RAM 33A and appropriately outputs a display signal for displaying the process result to the display driving circuit 37 so as to display the display information corresponding to the display signal on the display device 38.

The ROM 32A stores various process programs relating to the operation of the function electronic calculator 1 such as various setting processes and various calculation processes, applications for realizing various functions which the function electronic calculator 1 comprises, and the like therein. Further, the ROM 32A stores a function equation display control program 321A therein.

The function equation display control program 321A is a program for causing the CPU 31 to perform a function equation display control process of holding a display status of the equation display area 21 even when a display screen of the display device 38 is switched by switching an application.

The RAM 33 comprises a memory area which temporarily holds various programs executed by the CPU 31, data relating to execution of these programs, and the like. The RAM 33A particularly comprises a function equation data storage area 331A and an equation data storage area 332A. For example, function equations required when a graph such as linear function, quadratic function, trigonometric function, circle is created are stored in the function equation data storage area 331A. An equation generated by execution of the calculation process for the graph displayed in the graph display area 22 is stored in the equation data storage area 332A. Here, the calculation process includes, for example, a root process of finding an intersecting point of a graph and an x-axis, a tangent process of finding a tangent equation of a graph, an integral process of integrating, and the like.

The input device 34 is means by which a user inputs numerals, execution instruction of the calculation process, and the like, and corresponds to the operation input keys 11 and the direction key 12 in the example in FIG. 13. A signal corresponding to the key pressed by the user is output to the CPU 31. The input device 34 may include a pointing device such as a mouse, or the like.

The function electronic calculator 1 comprises the tablet (touch panel) 36 as an input device. The tablet 36 senses a position on the display device 38 indicated (touched) by an input pen (corresponding to the input pen 17 shown in FIG. 13), and outputs a signal in response to the indicated (touched) position. The position detecting circuit 35 connected to the tablet 36 detects a position coordinate indicated on the display device 38 on the basis of the signal input from the tablet 36. When the tablet 36 is used, the position in the display area of the display device 38 can be directly designated. Particularly, the input pen 17 is touched on the tablet 36 so that operations such as tap-in, drag, tap-out, and drop can be realized.

Here, tap-in means an operation of contacting the input pen 17 on the display screen 15, and tap-out means an operation of releasing the input pen 17 from the display screen 15 after touched. Drag means an operation of sliding the input pen 17 onto the display screen 15 from tap-in to tap-out, and drop means an operation of tap-out after drag is performed.

The display driving circuit 37 controls the display device 38 on the basis of the display signal input from the CPU 31 and causes it to display various screens. The display device 38 is constituted by a LCD, an ELD, or the like. This display device 38 corresponds to the display screen 15 shown in FIG. 13, and is integrally formed with the tablet 36.

The storage medium reading device 39 is a function section for performing reading/writing of data from/into the storage medium 160 such as, for example, a memory card, or a hard disk. The slot 16 in FIG. 13 corresponds thereto.

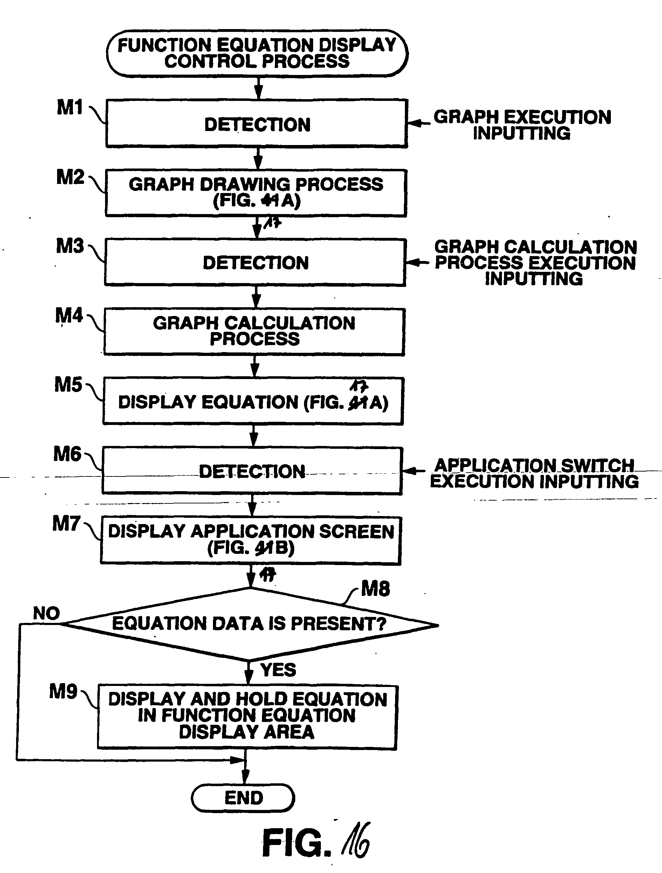

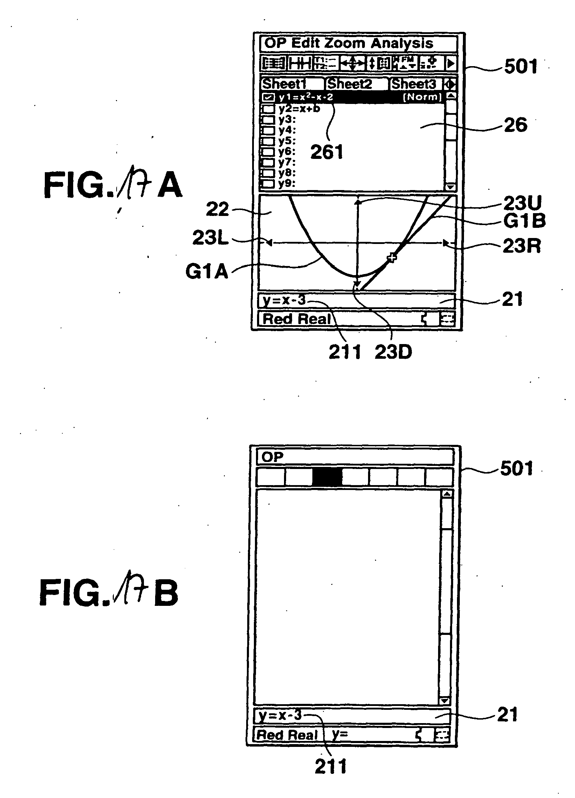

FIG. 16 is a flow chart for explaining an operation of the function equation display control process performed by the CPU 31 according to the function equation display control program 321A. FIGS. 17A and 17B are diagrams showing transition examples of a screen displayed on the display device 38. A flow of the function equation display control process will be described using FIGS. 16 to 17B.

When the graph mode is instructed by the mode switch operation, the CPU 31 starts execution of a predetermined program relating to the graph mode to set the graph mode, and waits for inputting of the setting items relating to the drawing of the graph such as inputting of an equation or a display range of the graph to be drawn. As shown in FIG. 16, when the CPU 31 detects graph execution inputting (step M1), the CPU 31 performs the graph drawing process according to the function equation selected in the function equation input area 26 and the input setting items (step M2; refer to FIG. 17A).

When the CPU 31 detects graph calculation process execution inputting (step M3), the CPU 31 performs the calculation process for a graph displayed in the graph display area 22 (step M4). Further, the CPU 31 displays an equation generated by the calculation process in the equation display area 21, and stores it in the equation data storage area 332A (step M4).

FIG. 17A is a diagram showing one example of the display screen 501 when a tangent G1B is displayed as a result of the tangent process for a graph G1A based on a function equation 261 in step M4. An equation 211 corresponding to the tangent G1B in step M5 is displayed in the equation display area 21.

When the CPU 31 detects a switch in an application (step M6), the CPU 31 switches the display screen of the display device 38 according to execution of the application (step M7).

The CPU 31 determines whether or not an equation is stored in the equation data storage area 332A (step M8). When an equation is not stored (step M8: No), the CPU 31 terminates the process. When an equation is stored (step M8: Yes), the CPU 31 holds the display of the equation display area 21 (step M4), and terminates the process.

FIG. 17B shows one example of the display screen 501 after the application has been switched. The display areas of the graph display area 22 and the function equation input area 26 are switched by execution of an application, but the equation display area 21 holds the display in a state where the equation 211 is displayed.

As described above, according to the fourth embodiment, the display of the equation display area 21 can be held even when the display of the display device 38 is switched by the switch in the application. Therefore, for example, since the display of the equation generated during the graph process can be held even when an application is switched during the graph process, the equation can be processed by execution of other application.

### [Fifth embodiment]

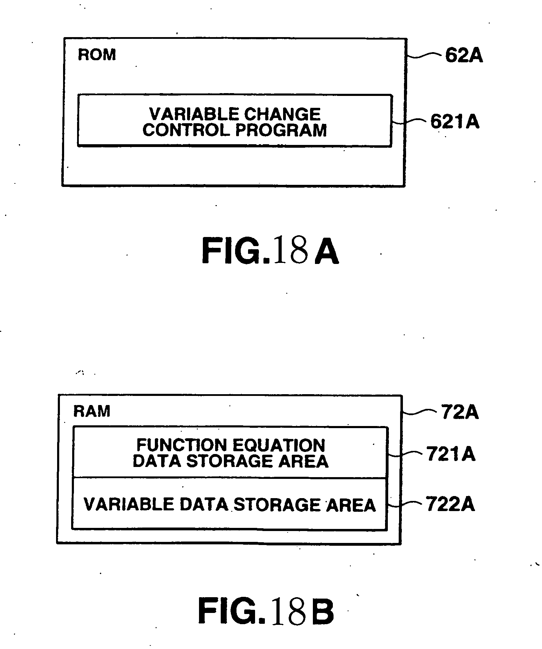

A fifth embodiment according to the present invention will be described. Since a configuration of a function electronic calculator according to the present embodiment is similar to a configuration where the ROM 32A and the RAM 33A are replaced with a ROM 62A shown in FIG. 18A and a RAM 72A shown in FIG. 18B, respectively, in the configuration of the function electronic calculator 1 described in FIG. 15 according to the fourth embodiment, like numerals are denoted to like constituents and a description thereof will be omitted below.

As shown in FIG. 18A, the ROM 62A stores a variable change control program 621A therein. The variable change control program 621A is a program for causing the CPU 31 to perform a variable change control process for changing a selected coefficient in a function equation displayed in the equation display area 21.

As shown in FIG. 18B, the RAM 72A comprises a function equation data storage area 721A and a variable data storage area 722A. A function equation corresponding to the graph displayed on the display device 38 is stored in the function equation data storage area 721A. A value of a selected coefficient in a function equation displayed in the equation display area 21 is stored in the variable data storage area 722A.

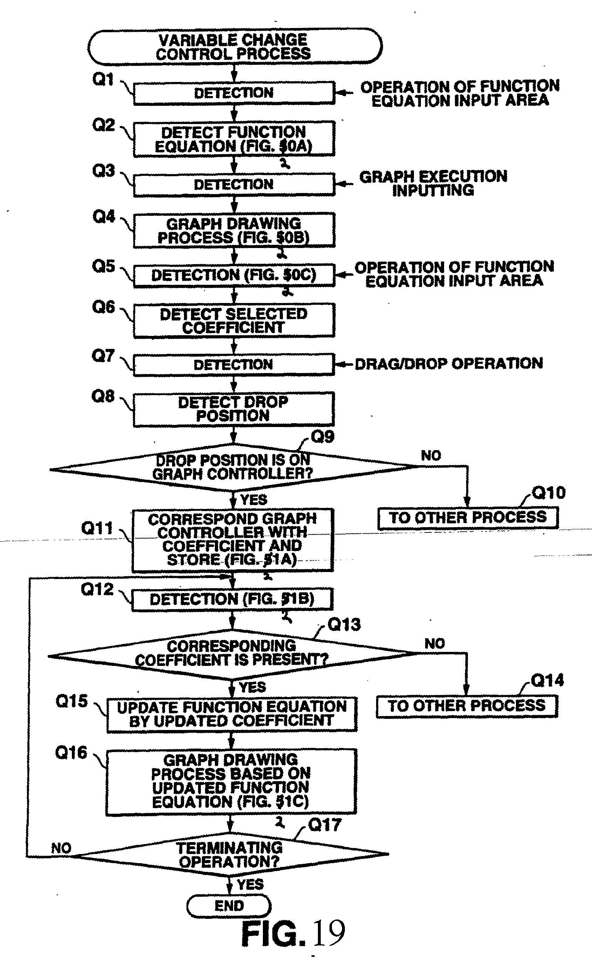

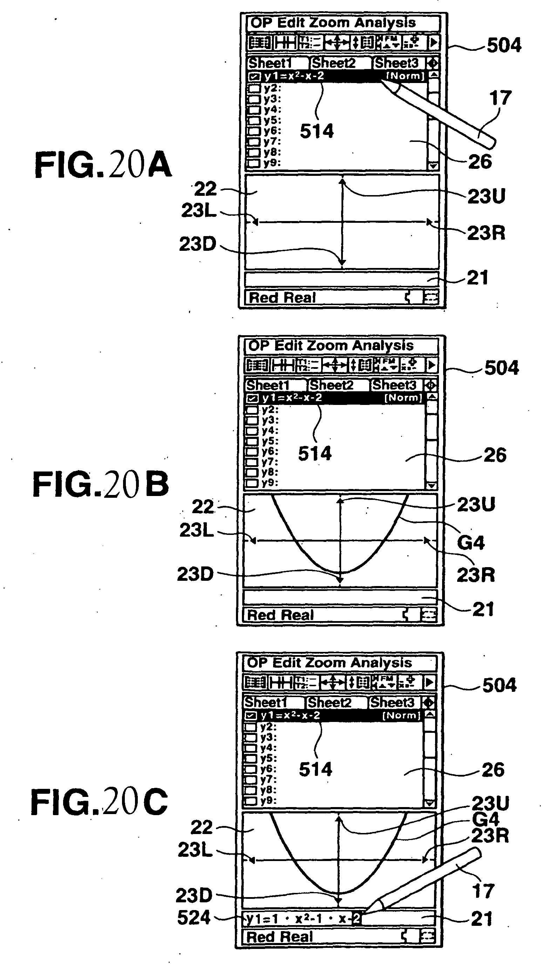

The variable change control process performed by the CPU 31 according to the variable change control program 621A will be described with reference to FIGS. 19 and 20A to 21C. FIG. 19 shows an operation flow of the function electronic calculator 1, and FIGS. 20A to 21C are diagrams showing transition examples of a screen displayed on the display device 38.

When the graph mode is instructed by the mode switch operation, the CPU 31 starts execution of a predetermined program relating to the graph mode to set the graph mode, and waits for inputting of the setting items relating to the drawing of the graph such as inputting of a function equation or a display range of the graph to be drawn. As shown in FIG. 19, when the CPU 31 detects an operation of the equation display area by the input pen 17 (step Q1), the CPU 31 detects a function equation selected by the operation (step Q2 ; refer to FIG. 20A). FIG. 20A shows one example of the display screen 504 when a function equation 514 displayed in the function equation input area 26 is tapped in by the input pen 17 in step Q2.

When the CPU 31 detects graph execution inputting (step Q3), the CPU 31 stores the selected function equation 514 in the function equation data storage area 721A, and performs the graph drawing process according to the function equation and the input setting items (step Q4; refer to FIG. 20B). One example of the display screen 504 displayed at this stage is shown in FIG. 20B. As illustrated, a graph G4 based on the set display range is drawn on the display screen 504.

When the CPU 31 detects an operation of the equation display area 21 by the input pen 17 (step Q5; refer to FIG. 20C), the CPU 31 detects a coefficient of a function equation 524 selected by the operation, and stores this selected coefficient in the variable data storage area 722A (step Q6; FIG. 20C).

When the CPU 31 detects a drag/drop operation of the coefficient by the input pen 17 (step Q7), the CPU 31 performs a detection of a drop position (step Q8). The CPU 31 determines whether or not the drop position is on the graph controller 23(step Q9), and performs other process (step Q10) in the case of other than the graph controller 23 (step Q9: No) .

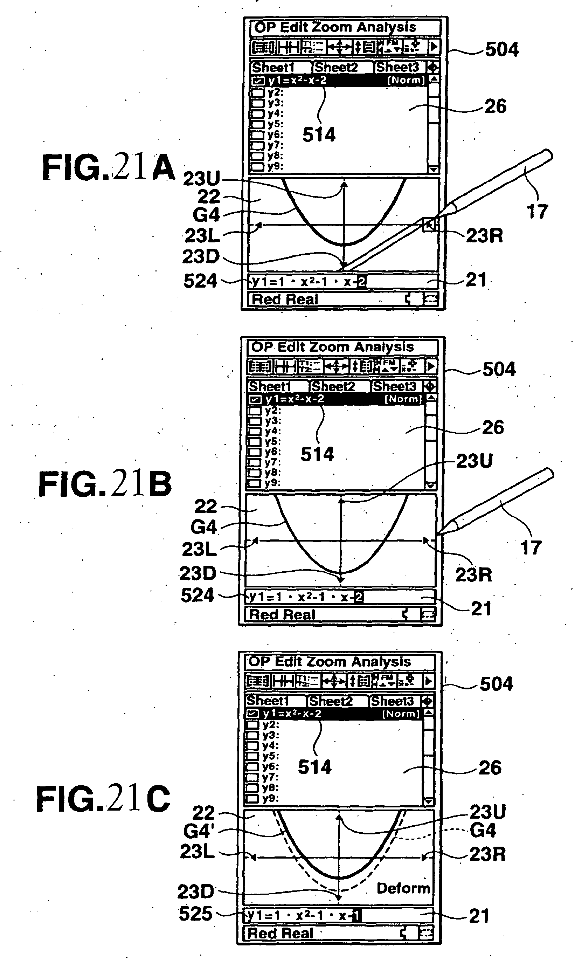

When the drop position is on the graph controller 23 (step Q10: Yes), the CPU 31 stores the graph controller 23 and the selected coefficient in the variable data storage area 722A in a corresponding manner (step Q11; refer to FIG. 21A). For example, as shown in FIG. 21A, when a coefficient "2" of the function equation 524 is selected and dragged, and is dropped at the position of the graph controller 23R, the coefficient "2" and the graph controller 23R are corresponded to each other, and are stored in the variable data storage area 722A.

When the CPU 31 detects an operation of the graph controller 23 (step Q12; refer to FIG. 21B), the CPU 31 determines whether or not the operated graph controller 23 and the coefficient are stored in the variable data storage area 722A in a corresponding manner (step Q13). In the case of not being stored (step Q13: No), the CPU 31 performs other process (step Q14). In the case of being stored (step Q13: Yes), the CPU 31 adds or subtracts a predetermined value to/from the coefficient, and updates the function equation stored in the function equation data storage area 721A on the basis of the updated coefficient (step Q15). The graph drawing process is performed on the basis of the function equation (step Q16; refer to FIG. 21C).

The predetermined value means the amount of change by which the coefficient is increased/decreased by one operation for the graph controller 23, and is previously set such as before the variable change control process is performed. For example, the predetermined value may be added to the coefficient corresponded to the graph controller when the graph controller 23U or 23R has been operated, and the predetermined value may be subtracted from the coefficient corresponded to the graph controller when the graph controller 23D or 23L has been operated.

FIG. 21B shows one example of the display screen 504 when the graph controller 23R is tapped in by the input pen 17 in step Q12. Here assuming that the coefficient "2" of the function equation 524 is registered in, for example, the graph controller 23R among the four graph controllers 23U, 23D, 23L, and 23R, since "1" is added by one operation by the input pen 17 for the graph controller 23R, a graph G4' (graph with solid line) corresponding to a function equation 525 based on the coefficient updated by this one operation is displayed in the graph display area 22 instead of the displayed graph G4 (graph with broken line) (FIG. 21C).

When one operation by the input pen 17 for the graph controller 23R is continuously performed, "1" is added and a graph corresponding to the function equation 525 based on the coefficient updated by this one operation is displayed in the graph display area 22.

The CPU 31 monitors the terminating operation, and determines whether or not the graph controller 23 has been operated by the input pen 17 (step Q17). When it is determined that the terminating operation has been detected (step Q17: Yes), the present process is terminated. When it is determined that the graph controller 23 has been operated by the input pen 17, the process returns to step Q12.

As described above, according to the fifteenth embodiment, after the input pen 17 is used to select a coefficient of the function equation displayed in the equation display area 21 and to register this selected coefficient in any one of the four graph controllers 23U, 23D, 23L, and 23R, each time when the operation of the input pen 17 is performed for the graph controller 23U, 23D, 23L, or 23R in which the selected coefficient is registered, a value of the registered coefficient can be changed. Therefore, the user can easily confirm a change in the shape of the graph along with the change in the coefficient by the operation of the input pen 17.

## Claims

1. A graphic display control device comprising:
a display screen (15) having a touch panel;
graphic display means (22) for displaying a functional graph and coordinate axes on the display screen (15); and
means (35, 36) for detecting a touch operation on a predetermined portion of the coordinate axes;
**characterized by**
function equation display means (21) for displaying a function equation corresponding to the functional graph displayed on the display screen (15);
processing means; and
function equation data storage means (331) for storing coefficients of the displayed function equation;
wherein the processing means are adapted to change a coefficient value in said function equation data storage means (331), according to the detection of said touch operation on the predetermined portion; and to cause said graphic display means to redisplay the functional graph according to the change of the coefficient.

2. The graphic display control device according to claim 1, wherein said processing means further being adapted to redisplay the function equation with the changed coefficient.

3. The graphic display control device according to claim 1, wherein said processing means further being adapted to set a coefficient included in the function equation as a subject to be changed, and change the coefficient set as the subject to be changed according to detection of a touch operation, with respect to the predetermined portion.

4. The graphic display control device according to claim 3, wherein the processing means further being adapted to set the coefficient as the subject to be changed according to either one of coefficients of the function equation displayed by the function equation display means being selected by a touch operation.

5. The graphic display control device according to claim 3, wherein the processing means further being adapted to associate the coefficient set as the subject to be changed with a touched predetermined portion of the graphics display means (22), upon detecting a drag/drop operation of the coefficient from the function equation display means (21) towards the predetermined portion, the coefficient being either one of the coefficients of the function equation displayed in the function equation display means (21), having been selected by a touch operation.

6. A computer program for a graphic display control device comprising a display screen and a touch panel, the program being stored in a computer readable medium and the program comprising instructions for:
displaying a functional graph and coordinate axes on the display screen; and
detecting a touch operation on a predetermined portion of the coordinate axes;
**characterized by** instructions for
displaying a function equation corresponding to the displayed functional graph on the display screen;
storing coefficients of the displayed function equation in a function equation data storage means (331);
changing a value of a coefficient stored in said function equation data storage means (331) according to the detection of the touch operation on the predetermined portion; and
redisplaying the functional graph according to the change of the coefficient.

7. A computer readable storage medium storing a computer program according to claim 6.

## Patentansprüche

1. Graphikanzeige-Steuervorrichtung, die umfasst:
einen Anzeigebildschirm (15) mit einem Touch-Panel;
eine Graphikanzeige-Einrichtung (22) zum Anzeigen einer Funktionskurve und von Koordinatenachsen auf dem Anzeigebildschirm (15); und
eine Einrichtung (35, 36) zum Erfassen einer Berührungsbetätigung an einem vorgegebenen Abschnitt der Koordinatenachsen;
**gekennzeichnet durch**
eine Funktionsgleichungs-Anzeigeeinrichtung (21) zum Anzeigen einer Funktionsgleichung, die der auf dem Anzeigebildschirm (15) angezeigten Funktionskurve entspricht;
eine Verarbeitungseinrichtung; und
eine Funktionsgleichungs-Datenspeichereinrichtung (331) zum Speichern von Koeffizienten der angezeigten Funktionsgleichung;
wobei die Verarbeitungseinrichtung so eingerichtet ist, dass sie einen Koeffizientenwert in der Funktionsgleichungs-Datenspeichereinrichtung (331) entsprechend der Erfassung der Berührungsbetätigung an dem vorgegebenen Abschnitt ändert und die graphische Anzeigeeinrichtung veranlasst, die Funktionskurve entsprechend der Änderung des Koeffizienten neu anzuzeigen.

2. Graphikanzeige-Steuervorrichtung nach Anspruch 1, wobei die Verarbeitungseinrichtung des weiteren so eingerichtet ist, dass sie die Funktionsgleichung mit dem geänderten Koeffizienten neu anzeigt.

3. Graphikanzeige-Steuervorrichtung nach Anspruch 1, wobei die Verarbeitungseinrichtung des weiteren so eingerichtet ist, dass sie einen Koeffizienten, der in der Funktionsgleichung enthalten ist, als ein zu änderndes Objekt einstellt und den als das zu ändernde Objekt eingestellten Koeffizienten entsprechend der Erfassung einer Berührungsbetätigung in Bezug auf den vorgegebenen Abschnitt ändert.

4. Graphikanzeige-Steuervorrichtung nach Anspruch 3, wobei die Verarbeitungseinrichtung des weiteren so eingerichtet ist, dass sie den Koeffizienten als das zu ändernde Objekt entsprechend einem durch die Funktionsgleichungs-Anzeigeeinrichtung angezeigten Koeffizienten der Funktionsgleichung, der durch eine Berührungsbetätigung ausgewählt wird, ändert.

5. Graphikanzeige-Steuervorrichtung nach Anspruch 3, wobei die Verarbeitungseinrichtung des weiteren so eingerichtet ist, dass sie beim Erfassen einer Drag/Drop-Betätigung des Koeffizienten von der Funktionsgleichungs-Anzeigeeinrichtung (21) in Richtung des vorgegebenen Abschnitts den als das zu ändernde Objekt eingestellten Koeffizienten mit einem berührten vorgegebenen Abschnitt der Graphikanzeige-Einrichtung (22) verknüpft, wobei der Koeffizient einer der Koeffizienten der auf der Funktionsgleichungs-Anzeigeeinrichtung (21) angezeigten Funktionsgleichung ist, der mit einer Berührungsbetätigung ausgewählt worden ist.

6. Computerprogramm für eine Graphikanzeige-Steuervorrichtung, die einen Anzeigebildschirm und ein Touch-Panel umfasst, wobei das Programm in einem computerlesbaren Medium gespeichert ist und das Programm Anweisungen umfasst zum:
Anzeigen einer Funktionskurve und von Koordinatenachsen auf dem Anzeigebildschirm; und
Erfassen einer Berührungsbetätigung an einem vorgegebenen Abschnitt der Koordinatenachsen;
**gekennzeichnet durch** Anweisungen zum:
Anzeigen einer Funktionsgleichung, die der angezeigten Funktionskurve entspricht, auf dem Anzeigebildschirm;
Speichern von Koeffizienten der angezeigten Funktionsgleichung in einer Funktionsgleichungs-Datenspeichereinrichtung (331);
Ändern eines Wertes eines in der Funktionsgleichungs-Datenspeichereinrichtung (331) gespeicherten Koeffizienten entsprechend der Erfassung der Berührungsbetätigung an dem vorgegebenen Abschnitt; und
Neuanzeigen der Funktionskurve entsprechend der Änderung des Koeffizienten.

7. Computerlesbares Speichermedium, das ein Computerprogramm nach Anspruch 6 speichert.

## Revendications

1. Dispositif de commande d'affichage graphique comprenant:
un écran d'affichage (15) comportant un écran tactile;
des moyens d'affichage graphique (22) pour afficher un graphe fonctionnel et des axes de coordonnées sur l'écran d'affichage (15) ; et
des moyens (35, 36) pour détecter une opération tactile sur une partie prédéterminée des axes de coordonnées ;
**caractérisé par**
des moyens d'affichage d'équation de fonction (21) pour afficher une équation de fonction correspondant au graphe fonctionnel affiché sur l'écran d'affichage (15) ;
des moyens de traitement ; et
des moyens de mémorisation de données d'équation de fonction (331) pour mémoriser les coefficients de l'équation de fonction affichée;
dans lequel les moyens de traitement sont adaptés pour modifier une valeur de coefficient dans lesdits moyens de mémorisation de données d'équation de fonction (331), conformément à la détection de ladite opération tactile sur la partie prédéterminée ; et pour amener lesdits moyens d'affichage graphique à réafficher le graphe fonctionnel conformément à la modification du coefficient.

2. Dispositif de commande d'affichage graphique selon la revendication 1, dans lequel lesdits moyens de traitement sont en outre adaptés pour réafficher l'équation de fonction avec le coefficient modifié.

3. Dispositif de commande d'affichage graphique selon la revendication 1, dans lequel lesdits moyens de traitement sont en outre adaptés pour fixer un coefficient inclus dans l'équation de fonction en tant qu'objet devant être modifié, et pour modifier le coefficient fixé en tant qu'objet devant être modifié conformément à la détection d'une opération tactile, en ce qui concerne la partie prédéterminée.

4. Dispositif de commande d'affichage graphique selon la revendication 3, dans lequel les moyens de traitement sont en outre adaptés pour fixer le coefficient en tant qu'objet devant être modifié conformément à l'un ou l'autre des coefficients de l'équation de fonction affichée par les moyens d'affichage d'équation de fonction sélectionné par une opération tactile.

5. Dispositif de commande d'affichage graphique selon la revendication 3, dans lequel les moyens de traitement sont en outre adaptés pour associer le coefficient fixé en tant qu'objet devant être modifié à une partie prédéterminée touchée des moyens d'affichage graphique (22), lors de la détection d'une opération glisser/déposer du coefficient des moyens d'affichage d'équation de fonction (21) vers la partie prédéterminée, le coefficient étant l'un ou l'autre des coefficients de l'équation de fonction affichée dans les moyens d'affichage d'équation de fonction (21), ayant été sélectionné par une opération tactile.

6. Programme informatique pour un dispositif de commande d'affichage graphique comprenant un écran d'affichage et un écran tactile, le programme étant mémorisé dans un support pouvant être lu par un ordinateur et le programme comprenant des instructions pour :
afficher un graphe fonctionnel et des axes de coordonnées sur l'écran d'affichage ; et
détecter une opération tactile sur une partie prédéterminée des axes de coordonnées ;
**caractérisé par** des instructions pour :
afficher une équation de fonction correspondant au graphe fonctionnel affiché sur l'écran d'affichage ;
mémoriser les coefficients de l'équation de fonction affichée dans des moyens de mémorisation de données d'équation de fonction (331) ;
modifier une valeur d'un coefficient mémorisé dans lesdits moyens de mémorisation de données d'équation de fonction (331) conformément à la détection de l'opération tactile sur la partie prédéterminée ; et
réafficher le graphe fonctionnel conformément à la modification du coefficient.

7. Support de mémorisation pouvant être lu par un ordinateur mémorisant un programme informatique selon la revendication 6.
